# EUROPÄISCHE PATENTSCHRIFT

(11) **EP 1 383 666 B1**
(45) Veröffentlichungstag und Bekanntmachung des Hinweises auf die Patenterteilung: **29.08.2007**
(21) Anmeldenummer: 02764053.1
(22) Anmeldetag: 03.04.2002
(51) Int. Cl.: B60R 7/10, B60R 13/02, F16B 45/00

(54) **INNENAUSSTATTUNGSVORRICHTUNG FÜR EIN FAHRZEUG, INSBESONDERE KRAFTFAHRZEUG**
INTERIOR FITTING DEVICE FOR A VEHICLE, IN PARTICULAR A MOTOR VEHICLE
DISPOSITIF D'EQUIPEMENT INTERIEUR POUR UN VEHICULE, NOTAMMENT POUR UN VEHICULE AUTOMOBILE

(30) Priorität: 21.04.2001 DE 10119604
(43) Veröffentlichungstag der Anmeldung: 28.01.2004
(73) Patentinhaber: Dr. Ing. H.C.F. Porsche Aktiengesellschaft, 70435 Stuttgart (DE)
(72) Erfinder: NABERT, Bernd, 72296 Schopfloch (DE); LUTZ, Erwin, 71701 Schwieberdingen (DE); DIEHM, Frank, 74366 Kircheim (DE)
(86) Internationale Anmeldenummer: PCT/EP2002/003705
(87) Internationale Veröffentlichungsnummer: WO 2002/085671

(56) Entgegenhaltungen:
- DE-A- 4 135 300
- DE-A- 4 333 479
- US-A- 3 845 890
- US-A- 5 492 260
- US-A- 5 507 423
- PATENT ABSTRACTS OF JAPAN vol. 2000, no. 23, 10. Februar 2001 (2001-02-10) -& JP 2001 171438 A (NIFCO INC), 26. Juni 2001 (2001-06-26)

## Beschreibung

Die Erfindung bezieht sich auf eine Innenausstattungsvorrichtung für ein Fahrzeug, insbesondere Kraftfahrzeug, die in einem Innenraum des Fahrzeugs anordenbar ist, gemäß Oberbegriffs des Anspruchs 1.

Aus der US 38 45 890 A geht eine gattungsbildende Innenausstattungsvorrichtung für ein Fahrzeug hervor. Diese Innenausstattungsvorrichtung besitzt ein an einer Fahrzeugwand befestigtes Verkleidungsteil und ein Befestigungsteil für das Verkleidungsteil. Das Befestigungsteil durchgreift das Verkleidungsteil und stützt sich auf der dahinter angeordneten Fahrzeugwand ab. Das Befestigungsteil wird von einem ersten Verbindungsmittel in Form einer Schraube durchgriffen, so dass das Befestigungsteil an der Fahrzeugwand festlegbar ist. Ferner besitzt diese bekannte Innenausstattungsvorrichtung ein Aufhängeteil, welches als Kleiderhaken ausgeführt ist, welcher in den Innenraum des Fahrzeugs hineinragt. Befestigungsteil und Aufhängeteil sind über einen Steg miteinander verbunden und das Aufhängeteil liegt an einer dem Innenraum des Fahrzeugs zugewandten Innenfläche des Verkleidungsteil an. Wie bereits vorstehend erwähnt, liegt das Befestigungsteil zwischen dem Verkleidungsteil und der Fahrzeugwand derart, dass der Steg einen Abschlussrand des Verkleidungsteils übergreift. Das Befestigungsteil und das Aufhängeteil können auf den Abschlussrand aufgesteckt sein. Der Kleiderhaken geht von einer Basisplatte aus, die am Aufhängeteil ausgebildet ist und die an der Innenfläche des Verkleidungsteils liegt.

In der DE 43 33 479 A1 wird eine Innenausstattungsvorrichtung für ein Fahrzeug beschrieben. Diese Innenausstattungsvorrichtung besitzt ein an einer Fahrzeugwand befestigtes Verkleidungsteil und ein Befestigungsteil für das Verkleidungsteil, wobei dieses Befestigungsteil nach Art eines Widerhakens ausgebildet ist und die Fahrzeugwand hintergreift. Ferner besitzt diese Innenausstattungsvorrichtung ein Aufhängeteil, insbesondere einen Kleiderhaken, der in den Innenraum des Fahrzeugs hineinragt. Das Befestigungsteil und das Aufhängeteil sind über einen Steg miteinander verbunden. Außerdem dient das Befestigungsteil sowohl für das Verkleidungsteil als auch das Aufhängeteil als Befestigung. Nachteilig ist, dass das Verkleidungsteil unmittelbar an der Fahrzeugwand anliegt. Eine ähnliche Innenausstattungsvorrichtung geht aus der JP 2001-171438 A hervor. Allerdings kann dabei das Verkleidungsteil mit Abstand zur Fahrzeugwand liegen.

Es ist daher Aufgabe der Erfindung, eine Innenausstattungsvorrichtung der eingangs genannten Art für ein Fahrzeug zu schaffen, deren Verkleidungsteil mit Abstand einfach an der Fahrzeugwand befestigt werden kann.

Gelöst wird diese Aufgabe mit einer Innenausstattungsvorrichtung, welche die in Anspruch 1 genannten Merkmale aufweist. Weitere, die Erfindung ausgestaltende Merkmale sind in den Unteransprüchen angegeben.

Die mit der Erfindung hauptsächlich erzielten Vorteile sind darin zu sehen, dass ein Verkleidungsteil einer Innenausstattungsvorrichtung eines Kraftfahrzeugs mit wenigen Montageschritten an der Fahrzeugwand und mit Abstand zu dieser befestigt werden kann. Für eine Vormontage bzw. ein sicheres Halten des Verkleidungsteils ist erfindungsgemäß zwischen Verkleidungsteil und Aufhängeteil ein zweites Verbindungsmittel eingesetzt.

Außerdem wird noch ein Aufhängeteil der Innenausstattungsvorrichtung an der Fahrzeugwand durch das Befestigungsteil gehalten. Zwischen dem Verkleidungsteil und der Fahrzeugwand kann eine Fahrzeugausstattungseinrichtung angeordnet werden. Ist das Verkleidungsteil an der B- oder C-Säule des Fahrzeugaufbaus angebracht, könnte als Fahrzeugausstattungseinrichtung hinter dem Verkleidungsteil beispielsweise eine Sicherheitsgurteinrichtung oder ein anderes Sicherheitselement, insbesondere Deformationselement, liegen.

Die Erfindung wird nachfolgend anhand von Ausführungsbeispielen mit Bezug auf die Zeichnung näher erläutert.

Es zeigen
- Fig. 1: ausschnittweise einen Innenraum eines Fahrzeugs mit einer in Schnittdarstellung wiedergegebenen Innenausstattungsvorrichtung,
- Fig. 2 und 3: in unterschiedlichen Perspektiven ein Befestigungselement der Innenausstattungsvorrichtung nach Fig. 1,
- Fig. 4: die Innenausstattungsvorrichtung in Schnittdarstellung entlang der Linie IV-IV in Fig. 1 und
- Fig. 5: eine Blende der Innenausstattungsvorrichtung nach Fig. 1.

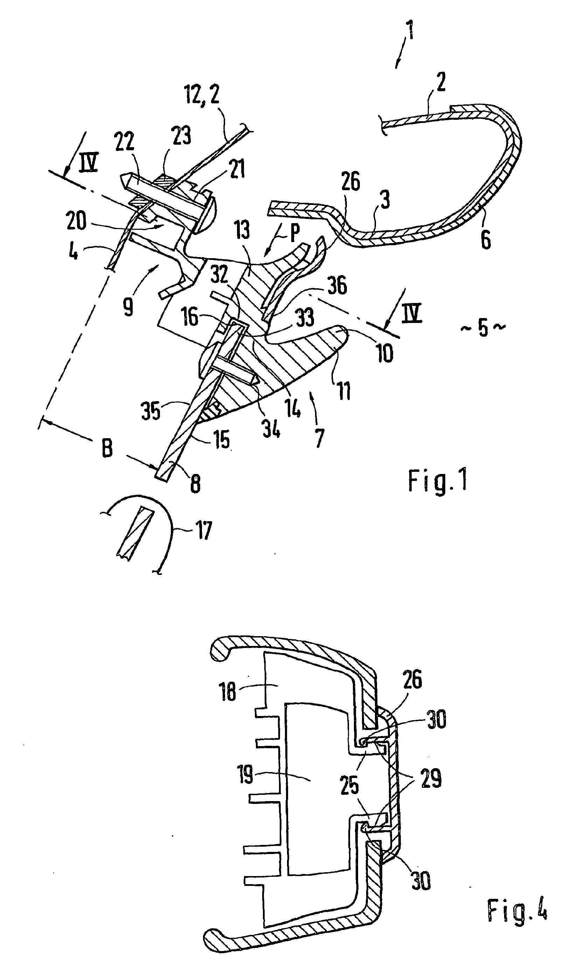

Die Fig. 1 zeigt teilweise ein Fahrzeug 1, insbesondere Kraftfahrzeug, beispielsweise einen Personenkraftwagen, wobei von dem Fahrzeug 1 lediglich Teile des Fahrzeugaufbaus 2 im Schnitt wiedergegeben sind. Insbesondere ist von dem Aufbau 2 ein Dachlängsholm 3 und eine B-Säule 4 ersichtlich. Der Dachlängsholm 3 kann an seiner von dem Innenraum 5 des Fahrzeug aus sichtbaren Fläche mit einer Abdeckung 6 verkleidet sein. Dem Dachlängsholms 3 gegenüber liegt ein weiterer Dachlängsholm (nicht dargestellt). Zwischen beiden Dachlängsholmen kann eine Dachöffnung liegen, die von einem entfernbaren oder verlagerbaren Dachdeckel freigegeben oder verschlossen werden kann. Die Dachlängsholme können Bestandteile des Rohbaus des Fahrzeugs 1 oder eines in den Rohbau einsetzbaren Dachmoduls sein, welches den Dachdeckel trägt.

In dem Innenraum 5 des Fahrzeugs 1 ist eine Innenausstattungsvorrichtung 7 angeordnet bzw. anordenbar. Sie umfasst zumindest ein, vorzugsweise formsteifes, Verkleidungsteil 8, ein Befestigungsteil 9 für das Verkleidungsteil und ein in den Innenraum 5 hineinragendes Aufhängeteil 10, welches einen Kleiderhaken 11 aufweisen oder diesen Kleiderhaken 11 bilden kann. Das Verkleidungsteil 8 wird mit dem Befestigungsteil 9 an einer Fahrzeugwand 12 befestigt, die rein beispielhaft als B-Säule 4 angenommen ist. Es ist jedoch auch möglich, das Verkleidungsteil 8 an anderen Fahrzeuginnenwänden, wie z.B. der A- oder C-Säule, dem Dach oder dgl. zu befestigen.

Das Befestigungsteil 9 und das Aufhängeteil 10 sind über einen Steg 13 miteinander verbunden. Steg 13, Befestigungsteil 9 und Aufhängeteil 10 können einstückig, vorzugsweise als Kunststoffteil, hergestellt werden. Eine Basisplatte 14 des Aufhängeteils 10 liegt an einer dem Innenraum 5 zugewandten Innenfläche 15 des Verkleidungsteils 8 an. Das Befestigungsteil 9 ist zwischen dem Verkleidungsteil 8 und der Fahrzeugwand 12 angeordnet, so dass das Verkleidungsteil 8 mit Abstand zu der Fahrzeugwand 12 liegt. Das Befestigungsteil 9 mit dem Aufhängeteil 10 ist auf einen Abschlussrand 16 des Verkleidungsteils 8 aufgesteckt, wobei dieser Rand 16 im Ausführungsbeispiel der obere Rand ist, der benachbart zum Dachlängsholm 3 angeordnet ist. Durch das Aufstecken des Befestigungsteils 9 und des Aufhängeteils 10 in Pfeilrichtung P übergreift der Steg 13 diesen Rand 16. Da das Aufhängeteil 10 auf der Innenfläche 15 des Verkleidungsteils 8 zu liegen kommt, wird beim Befestigen des Befestigungsteils 9 an der Fahrzeugwand 12 das Verkleidungsteil 8 gleich mit befestigt. Durch die Breite B des Befestigungsteils 9 liegt das Verkleidungsteil 8 mit Abstand zur Fahrzeugwand 12, wodurch Raum für eine Fahrzeugausstattungseinrichtung geschaffen ist. Im gezeigten Ausführungsbeispiel ist diese eine Sicherheitsgurteinrichtung, deren Gurt 17 hinter dem Verkleidungsteil 8 geführt ist.

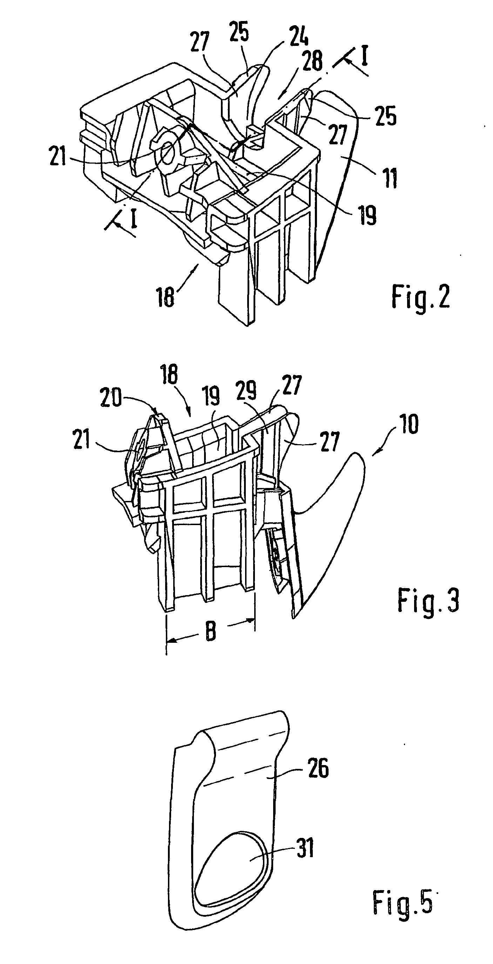

Anhand der Fig. 2 und 3 wird das Befestigungsteil 9 näher beschrieben. Es kann von einem quaderförmigen Block 18 mit der Breite B gebildet sein, der vorzugsweise hohl ist, also zumindest eine innere Ausnehmung 19 besitzt. Über die äußere Kontur des Blocks 18 steht etwa parallel zur Fahrzeugwand 12 verlaufend ein Wandbereich 20 über, der einen Durchbruch 21 aufweist, durch den ein erstes Verbindungsmittel 22 (Fig. 1) greift, welches an der Fahrzeugwand 12 festgelegt ist, vorzugsweise in einem Aufnahmemittel 23, das an der Fahrzeugwand 12 befestigt oder ausgebildet sein kann. Vorzugsweise ist das erste Verbindungsmittel 22 eine Schraube, die in das Aufnahmemittel 23 eingeschraubt ist. Damit das erste Verbindungsmittel 22 von dem Innenraum 5 her gesetzt werden kann, ist vor dem Durchbruch 21 eine Ausnehmung 24 in dem Block 18 bzw. Steg 13 vorgesehen, die fluchtend vor dem Durchbruch 21 liegt. Von dem Randbereich der Ausnehmung 24 geht eine Haltevorrichtung 25 für eine Blende 26 aus, die wenigstens die Ausnehmung 24 bzw. das Verbindungsmittel 22 abdeckt. Die Haltevorrichtung 25 kann von dem Steg 13, dem Befestigungsteil 9 oder dem Aufhängeteil 10 ausgehen. Die Blende 26 kann bis an die Abdeckung 6 des Dachlängsholms 3 heran reichen. Die Haltevorrichtung 25 umfasst vorzugsweise zwei Fortsätze 27, die von dem Randbereich der Ausnehmung 24 entspringen, in Richtung des Fahrzeuginnenraums 5 zeigen und sich von dem Rand 16 weg erstrecken. Die beiden Fortsätze 27 liegen mit Abstand zueinander und bilden so zwischen sich einen Durchgriffsraum 28, in dem auch die Ausnehmung 24 liegt. Über den Durchgriffsraum kann somit ein Betätigungswerkzeug an das erste Verbindungsmittel 22 heran geführt werden. An jedem Fortsatz 27 ist ein Rastvorsprung 29 ausgebildet, hinter den eine an der Blende 26 vorgesehene Rastnase 30 greift, wie dies insbesondere in Fig. 4 zu sehen ist, aus der auch hervorgeht, dass der Querschnitt des Verkleidungsteils 8 C-förmig sein kann. Aus Fig. 1 und Fig. 5 wird klar, dass die Blende 26 die Basisplatte 14 des Aufhängeteils 10 abdeckt. Durch eine Durchbrechung 31 an der Blende 26 ragt der Kleiderhaken 11 in den Innenraum 5 hinein.

Es kann in den Steg 13 eine Aufnahmeausnehmung 32 eingebracht sein, in der der hinter dem Rand 16 liegende Randbereich 33 des Verkleidungsteils 8 aufgenommen ist. Befestigungsteil 9 und Aufhängeteil 9 sind beabstandet zueinander, so dass der Randbereich 33 dazwischen aufgenommen ist, für den dort eine Rast- oder Klemmverbindung vorgesehen sein kann, um eine Vormontage durch Aufstecken des Befestigungsteils 9 und des Aufhängeteils 10 auf das Verkleidungsteil 8 zu ermöglichen. Für die Vormontage bzw. für ein sicheres Halten des Verkleidungsteils 8 kann zwischen dem Verkleidungsteil 8 und dem Aufhängeteil 10 ein zweites Verbindungsmittel 34 eingesetzt sein, das vorzugsweise das Verkleidungsteil 8 durchsetzt und in der Basisplatte 14 des Aufhängeteils 10 festgelegt ist. Das zweite Verbindungsmittel 34 kann von einer Außenfläche 35 des Verkleidungsteils 8 her, die bei im Fahrzeug eingebauter Innenausstattungsvorrichtung 7 von dem Innenraum 5 abgewandt ist, das Verkleidungsteil 8 mit der Basisplatte 14 verbinden. Das zweite Verbindungsmittel 34 wird eingesetzt, bevor das Verkleidungsteil 8 an der Fahrzeugwand 12 befestigt wird. Da das zweite Verbindungsmittel 34 von der Außenseite 35 her eingeschraubt ist, wäre es denkbar, die Blende 26 so auszubilden, dass sie lediglich bis an den oberen Rand 36 der Basisplatte 14 reicht und so nur den Zwischenraum 28, die Ausnehmung 24 und das erste Verbindungsmittel 22 verdeckt.

## Patentansprüche

1. Innenausstattungsvorrichtung (7) für ein Fahrzeug (1), insbesondere Kraftfahrzeug, die in einem Innenraum (5) des Fahrzeugs (1) anordenbar ist, mit einem an einer Fahrzeugwand (12) befestigbaren Verkleidungsteil (8), einem Befestigungsteil (9) für das Verkleidungsteil (8) und mit einem in den Innenraum (5) ragenden Aufhängeteil (10), wobei das Befestigungsteil (9) und das Aufhängeteil (10) über einen Steg (13) miteinander verbunden sind, das Befestigungsteil (9) an der Fahrzeugwand (12) befestigbar ist und das Aufhängeteil (10) an einer dem Innenraum (5) zugewandten Innenfläche (15) des Verkleidungsteils (8) liegt, wobei das Befestigungsteil (9) zwischen dem Verkleidungsteil (8) und der Fahrzeugwand (4) anordenbar ist, der Steg (13) einen Abschlussrand (16) des Verkleidungsteils (8) übergreift, das Befestigungsteil (9) und das Aufhängeteil (10) auf den Abschlussrand (16) aufgesteckt sind und das Befestigungsteil (9) einen Durchbruch (21) besitzt, durch den ein erstes Verbindungsmittel (22) greift, welches das Befestigungsteil (9) an der Fahrzeugwand (4) hält, und wobei das Aufhängeteil (10) eine Basisplatte (14) umfasst, die an der Innenfläche (15) des Verkleidungsteils (8) liegt und die einen Haken (11) trägt, **dadurch gekennzeichnet, dass** das Verkleidungsteil (8) und die Basisplatte (14) mittels eines zweiten Verbindungsmittels (34) miteinander verbunden sind.

2. Innenausstattungsvorrichtung nach Anspruch 1, **gekennzeichnet durch** eine Blende (26), die wenigstens das erste Verbindungsmittel (22) verdeckt, wobei diese Blende (26) mittels einer Haltevorrichtung (25), vorzugsweise verrastbar, an dem Befestigungsteil (9) oder dem Aufhängeteil (10) oder dem Steg (13) befestigt ist.

3. Innenausstattungsvorrichtung nach Anspruch 2, **dadurch gekennzeichnet, dass** die Haltevorrichtung (25) zumindest einen sich in Richtung des Innenraums (5) erstreckenden Fortsatz (27) umfasst, an dem ein Rastvorsprung (29) ausgebildet ist, hinter den eine an der Blende (26) vorgesehene Rastnase (30) greift.

4. Innenausstattungsvorrichtung nach Anspruch 3, **dadurch gekennzeichnet, dass** zwei Fortsätze (27) vorgesehen sind, die beabstandet zueinander liegen und so zwischen sich einen Durchgriffsraum (28) für ein Betätigungswerkzeug für das erste Verbindungsmittel (22) bilden, und dass hinter dem Durchgriffsraum (28) der Durchbruch (21) fluchtend liegt.

5. Innenausstattungsvorrichtung nach Anspruch 2, **dadurch gekennzeichnet, dass** die Blende (26) die Basisplatte (14) verdeckt und eine Durchbrechung (31) für den Haken (11) aufweist.

6. Innenausstattungsvorrichtung nach Anspruch 1, **dadurch gekennzeichnet, dass** das zweite Verbindungsmittel (34) von der dem Innenraum (5) abgewandten Außenfläche (35) des Verkleidungsteils (8) her das Verkleidungsteil (8) durchgreift und in der Basisplatte (14) festgelegt ist.

7. Innenausstattungsvorrichtung nach einem der Ansprüche 1, 3 oder 4, **dadurch gekennzeichnet, dass** das Befestigungsteil (8) als quaderförmiger, vorzugsweise hohler, Block (18) ausgebildet ist, von dem - dessen Kontur überragend - der bzw. die Fortsätze (27) und ein den Durchbruch (21) für das erste Verbindungsmittel (22) aufweisender Wandbereich (20) hervorstehen.

8. Innenausstattungsvorrichtung nach Anspruch 1, **dadurch gekennzeichnet, dass** der Steg (13), das Aufhängeteil (10) und das Befestigungsteil (9) einstückig hergestellt sind.

## Claims

1. An interior fitting device (7) for a vehicle (1), especially a motor vehicle, which device (7) is arrangeable in an interior (5) of the vehicle (1), with a lining part (8) which is fixable to a vehicle wall (12), a fixing part (9) for the lining part (8), and a hanger part (10) which projects into the interior (5), wherein the fixing part (9) and the hanger part (10) are connected to one other by a crosspiece (13), the fixing part (9) is fixable to the vehicle wall (12), and the hanger part (10) lies against an inner surface (15) of the lining part (8), said inner surface (15) facing the interior (5), wherein the fixing part (9) is arrangeable between the lining part (8) and the vehicle wall (4), the crosspiece (13) engages over a boundary edge (16) of the lining part (8), the fixing part (9) and the hanger part (10) are mounted on the boundary edge (16), and the fixing part (9) has an opening (21) through which extends a first connecting means (22) which holds the fixing part (9) on the vehicle wall (4), and wherein the hanger part (10) comprises a base plate (14) which lies against the inner surface (15) of the lining part (8) and carries a hook (11), **characterised in that** the lining part (8) and the base plate (14) are connected to one other by a second connecting means (34).

2. An interior fitting device according to claim 1, **characterised by** a cover (26) which conceals at least the first connecting means (22), wherein this cover (26) is fixed to the fixing part (9) or the hanger part (10) or the crosspiece (13) by means of a holding device (25), preferably in a snap-locking manner.

3. An interior fitting device according to claim 2, **characterised in that** the holding device (25) comprises at least one extension (27) which extends toward the interior (5) and on which a locking projection (29) is formed, behind which engages a detent (30) provided on the cover (26).

4. An interior fitting device according to claim 3, **characterised in that** two extensions (27) are provided which lie spaced apart and thus form between them a passage (28) for an actuating tool for the first connecting means (22), and **in that** the opening (21) lies behind the passage (28) and is aligned therewith.

5. An interior fitting device according to claim 2, **characterised in that** the cover (26) conceals the base plate (14) and has an aperture (31) for the hook (11).

6. An interior fitting device according to claim 1, **characterised in that** the second connecting means (34) extends through the lining part (8) from the outer surface (35) of the lining part (8) and is secured in the base plate (14), said outer surface (35) being remote from the interior (5).

7. An interior fitting device according to any one of claims 1, 3 and 4, **characterised in that** the fixing part (8) is formed as a cuboidal, preferably hollow block (18), from which - projecting beyond the contour thereof - the extension or extensions (27) and a wall region (20) provided with the opening (21) for the first connecting means (22) extend.

8. An interior fitting device according to claim 1, **characterised in that** the crosspiece (13), the hanger part (10) and the fixing part (9) are formed in one piece.

## Revendications

1. Dispositif d'équipement intérieur (7) pour un véhicule, en particulier un véhicule automobile, qui est apte à être monté dans un habitacle (5) du véhicule (1), comportant une partie d'habillage (8), qui peut être fixée contre une paroi (12) du véhicule, une partie de fixation (9) pour la partie d'habillage (8) et une partie d'accrochage (10) qui s'avance en saillie dans l'habitacle (5), la partie de fixation (9) et la partie d'accrochage (10) étant reliées l'une à l'autre par une branche (13), la partie de fixation (9) pouvant être fixée contre la paroi (12) du véhicule et la partie d'accrochage (10) étant en appui contre une face intérieure (15) de la partie d'habillage (8), orientée vers l'habitacle (5), la partie de fixation (9) pouvant être disposée entre la partie d'habillage (8) et la paroi (4) du véhicule, la branche (13) enserrant par le dessus un bord frontal (16) de la partie d'habillage (8), la partie de fixation (9) et la partie d'accrochage (10) étant enfichées sur le bord frontal (16) et la partie de fixation (9) comportant un trou débouchant (21), à travers lequel s'engage un premier moyen d'assemblage (22), qui maintient la partie de fixation (9) contre la paroi (4) du véhicule, et la partie d'accrochage (10) comportant un socle (14) qui est situé sur la face intérieure (15) de la partie d'habillage (8) et qui porte un crochet (11), **caractérisé en ce que** la partie d'habillage (8) et le socle (14) sont assemblés l'un à l'autre par un deuxième moyen d'assemblage (34).

2. dispositif d'équipement intérieur selon la revendication 1, **caractérisé par** un cache (26), qui masque au moins le premier moyen d'assemblage (22), ledit cache (26) étant fixé, de préférence bloqué, au moyen d'un dispositif de fixation (25), contre lequel est fixée la partie de fixation (9) ou la partie d'accrochage (10) ou la branche (13).

3. dispositif d'équipement intérieur selon la revendication 2, **caractérisé en ce que** le dispositif de fixation (25) comporte au moins une saillie (27) qui est orientée vers l'habitacle (5) et sur laquelle est réalisé un téton de blocage (29), derrière lequel s'engage un bec d'arrêt (30) prévu sur le cache (26).

4. dispositif d'équipement intérieur selon la revendication 3, **caractérisé en ce qu'**il est prévu deux saillies (27) qui sont situées à distance l'une de l'autre et forment ainsi entre elles un espace de passage (28) pour un outil destiné à actionner le premier moyen d'assemblage (22), et **en ce que** le trou débouchant (21) est situé derrière l'espace de passage (28) en étant aligné avec celui-ci.

5. dispositif d'équipement intérieur selon la revendication 2, **caractérisé en ce que** le cache (26) masque le socle (14) et comporte un passage (31) pour le crochet (11).

6. Dispositif d'équipement intérieur selon la revendication 1, **caractérisé en ce que** le deuxième moyen d'assemblage (34) traverse la partie d'habillage (8) à partir de la face extérieure (35) de la partie d'habillage (8), opposée à l'habitacle (5), et est fixé dans le socle (14).

7. Dispositif d'équipement intérieur selon la revendication 1, 3 ou 4, **caractérisé en ce que** la partie de fixation (9) est réalisée sous forme de corps (18) parallélépipédique, de préférence creux, sur lequel s'avancent - en saillie sur son contour - la ou les saillies (27) et une zone de paroi (20) comportant le trou débouchant (21) pour le premier moyen d'assemblage (22).

8. Dispositif d'équipement intérieur selon la revendication 1, **caractérisé en ce que** la branche (13), la partie d'accrochage (10) et la partie de fixation (9) sont réalisées d'un seul tenant.
